# EUROPÄISCHE PATENTANMELDUNG

(11) **EP 0 994 007 A2**
(43) Veröffentlichungstag der Anmeldung: **19.04.2000**
(21) Anmeldenummer: 99118430.0
(22) Anmeldetag: 17.09.1999
(51) Int. Cl.: B62D 29/00, B62D 21/11, B62D 23/00

(54) **Tragstruktur einer Karosserie eines Kraftfahrzeugs sowie Verfahren zur Herstellung einer Tragstruktur**

(30) Priorität: 16.10.1998 DE 19847876
(71) Anmelder: Volkswagen Aktiengesellschaft, 38436 Wolfsburg (DE)
(72) Erfinder: Kutz, Dietmar, Dipl.-Ing., 38102 Braunschweig (DE); Poschmann, Michael, Dipl.-Ing., 38165 Lehre (DE)

(57) **Zusammenfassung**

Tragstruktur einer Karosserie eines Kraftfahrzeugs umfassend mindestens einen Längsträger (2) und einen mit diesem verbindbaren Federbeinträger (1), der eine mit ihm einstückig ausgebildete Federbeinaufnahme (Federbeinteller 5) umfaßt, wobei der Federbeinträger (1) als Gußteil ausgeführt ist. Vorzugsweise ist der Federbeinträger (1) aus Magnesium oder einer Magnesiumlegierung gefertigt. Insbesondere kann die einstückig mit dem Federeinträger (1) ausgeführte Federbeinaufnahme ein Federbeinteller (5) sein.

## Beschreibung

Die vorliegende Erfindung betrifft eine Tragstruktur einer Karosserie eines Kraftfahrzeugs sowie ein Verfahren zur Herstellung einer Tragstruktur, insbesondere umfassend mindestens einen Längsträger und einen mit diesem verbindbaren Federbeinträger, der eine mit ihm einstückig ausgebildete Federbeinaufnahme umfaßt.

Eine Tragstruktur der vorgenannten Art sowie ein Verfahren zu ihrer Herstellung ist aus der europäischen Patentschrift EP 0 733 542 B1 bekannt. Bei der darin beschriebenen Tragstruktur ist der Längsträger als Hohlprofil ausgeführt. Ein Federbeinträger mit einer von diesem umfaßten Federbeinaufnahme kann gemäß der vorgenannten Patentschrift durch Innenhochdruckumformen dadurch erzeugt werden, daß beispielsweise oberhalb und unterhalb des als Hohlprofil ausgebildeten Längsträgers aus diesem ein topfförmiges Profil herausgeform wird, wobei dieses Profil an einer Seite eine Öffnung beispielsweise mit einer Profilerweiterung umfaßt. In diese Öffnung können weitere Zusatzteile für die Aufnahme und Stabilisierung eines Federbeins eingesetzt werden. Als nachteilig bei diesem Stand der Technik erweist sich, daß zum einen der Federbeinträger mit der darin integrierten Federbeinaufnahme unter beträchlichem Aufwand durch Innenhochdruckumformen hergestellt werden muß. Zum anderen ist je nach Wandstärke des Federbeinträgers bzw. der Federbeinaufnahme eine nur ungenügend stabile Halterung des Federbeins gegeben. Weiterhin müssen zur Halterung des Federbeins in der Federbeinaufnahme Zusatzteile in dieser untergebracht werden.

Aus der deutschen Offenlegungsschrift DE 196 06 590 A1 ist eine Tragstruktur eines Kraftfahrzeugs bekannt, bei der Federbeinträger und Längsträger zumindest abschnittsweise einstückig miteinander ausgeführt sind. Bei dem in der genannten Offenlegungsschrift beschriebenen Ausführungsbeispiel ist sowohl der Längsträger als auch der Federbeinträger zweiteilig aus jeweils in der Längsrichtung aneinanderliegenden Abschnitten ausgeführt. Jeder der Abschnitte des Längsträgers geht in den entsprechenden Abschnitt des Federbeinträgers über. Die genannten Abschnitte sind aus Hohlprofilen gefertigt und insbesondere im Bereich einer Federbeinaufnahme über ein Verbindungselement miteinander verbunden. Die aus dieser Offenlegungsschrift bekannte Tragstruktur ist relativ kompliziert aufgebaut, wobei die Federbeinaufnahme nicht einstückig mit dem Federbeinträger verbunden ist, so daß ein großer Montageaufwand erforderlich ist, um ein Federbein an dieser Tragstruktur anzubringen.

Das der vorliegenden Erfindung zugrundeliegende Problem ist die Schaffung einer Tragstruktur der eingangs genannten Art, die einfacher und montagefreundlicher aufgebaut ist.

Dies wird erfindungsgemäß dadurch erreicht, daß der Federbeinträger als Gußteil ausgeführt ist. Ein Gußteil kann wesentlich einfacher gefertigt werden als ein relativ kompliziertes durch Innenhochdruckumformen zu erzeugendes Hohlprofil. Weiterhin ergibt sich durch die einstückige Ausführung von Federbeinträger und Federbeinaufnahme als Gußteil ein sehr einfacher Aufbau der erfindungsgemäßen Tragstruktur.

Vorteilhafterweise kann der Federbeinträger aus Magnesium oder einer Magnesiumlegierung gefertigt sein, wodurch der Federbeinträger sehr leicht ausgeführt sein kann. Gegenüber den Federbeinträgern aus dem Stand der Technik ergibt sich hierdurch ein Gewichtsvorteil. Insbesondere wenn der Federbeinträger als vorzugsweise dünnwandiges hohles Bauteil ausgeführt ist, ergibt sich ein beträchtlicher Gewichtsvorteil gegenüber dem Stand der Technik.

Gemäß einer bevorzugten Ausführungsform der vorliegenden Erfindung ist die einstückig mit dem Federbeinträger ausgeführte Federbeinaufnahme ein Federbeinteller. Durch diese Ausgestaltung der Federbeinstütze mit integriertem Federbeinteller sind für die Anbringung des Federbeins keine Zusatzteile notwendig, so daß die Montage wesentlich vereinfacht wird.

Gemäß einer bevorzugten Ausführungsform der vorliegenden Erfindung ist der Federbeinträger mit dem beispielsweise als Aluminiumstrangpreßprofil ausgeführten Längsträger verklebbar und/oder vernietbar. Hier kann beispielsweise die Unterseite des Federbeinträgers mit der Oberseite des Längsträgers verklebbar und/oder vernietbar sein. Zusätzlich oder alternativ dazu kann der Längsträger eine sich von seiner Oberseite nach oben erstreckende, vorzugsweise als Platte ausgebildete Anlagefläche umfassen, an der der Federbeinträger seitlich zumindest teilweise anliegen kann, wobei Anlagefläche und Seitenfläche des Federbeinträgers im Bereich ihrer gegenseitigen Anlage miteinander verklebbar und/oder vernietbar sind. Die vorgenannte Verbindung zwischen Federbeinträger und Längsträger erfordert nur einen relativ geringen Montageaufwand.

Vorteilhafterweise geht der Federbeinträger an seinem oberen Ende in eine sich im wesentlichen horizontal erstreckende Plattform über, auf der eine Domstrebenaufnahme insbesondere durch Verschraubung angebracht ist. Auf der Oberseite dieser oberen Plattform kann beispielsweise der Federbeinteller ausgeformt sein. Dazu ist dann in der Domstrebenaufnahme eine Öffnung vorgesehen, durch die der Federbeinteller hindurchragen kann. Die einstückige Ausformung der oberen Plattform mit dem Federbeinträger zur Anbringung der Domstrebenaufnahme vermindert weiterhin die Anzahl der für die Tragstruktur notwendigen Zusatzteile.

Gemäß einer bevorzugten Ausführungsform der vorliegenden Erfindung umfaßt der Federbeinträger einstückig mit ihm ausgeführte Nebenaggregatlagerungen und/oder Halterungen für sonstige Anbauteile wie Treibstoffilter oder dergleichen. Durch eine derartige einstückige Ausführung von Federbeinträger mit den Lagerungen und/oder Halterungen wird der Fertigungsaufwand erheblich reduziert, weil durch ein in einem einzigen Arbeitsgang herstellbares Gußteil eine ganze Reihe von Funktionen erfüllt werden können.

Vorzugsweise kann die Tragstruktur einen weiteren, mit dem ersten Längsträger im wesentlichen fluchtenden und mit diesem über einen geeigneten Adapter verbundenen Längsträger umfassen, der vorzugsweise als Deformationselement aus einem kohlenstoffaserverstärkten Kunststoff hergestellt sein kann. An diesem oder an dem ersten Längsträger kann weiterhin eine vorzugsweise aus Magnesium oder einer Magnesimlegierung bestehende Motorlagerung durch Kleben und/oder Vernieten befestigt sein. Die Fertigung der Motorlagerung aus Magnesium oder einer Magnesiumlegierung vermindert das. Gewicht der Tragstruktur. Weiterhin stellt das Kleben und/oder Vernieten dieser Motorlagerung an einen der Längsträger eine unkomplizierte Anbringungsart dar.

Gemäß einem erfindungsgemäßen Verfahren zur Herstellung einer erfindungsgemäßen Tragstruktur wird die Motorlagerung zusammen mit dem Federbeinträger gegossen, anschließend von dem Federbeinträger abgeklappt oder getrennt und daran anschließend an einen der Längsträger angeklebt und/oder angenietet. Insbesondere das gemeinsame Gießen von Federbeinträger und Motorlagerung trägt zur weiteren Reduzierung des Fertigungsaufwands bei.

Weitere Vorteile und Merkmale der vorliegenden Erfindung werden deutlich anhand der nachfolgenden Beschreibung eines bevorzugten Ausführungsbeispiels unter Bezugnahme auf die beiliegenden Abbildungen. Darin zeigen
- Fig. 1: eine perspektivische Vorderansicht eines erfindungsgemäßen Federbeinträgers mit daran angeordneten Teilen;
- Fig. 2: eine perspektivische Rückansicht eines erfindungsgemäßen Federbeinträgers.

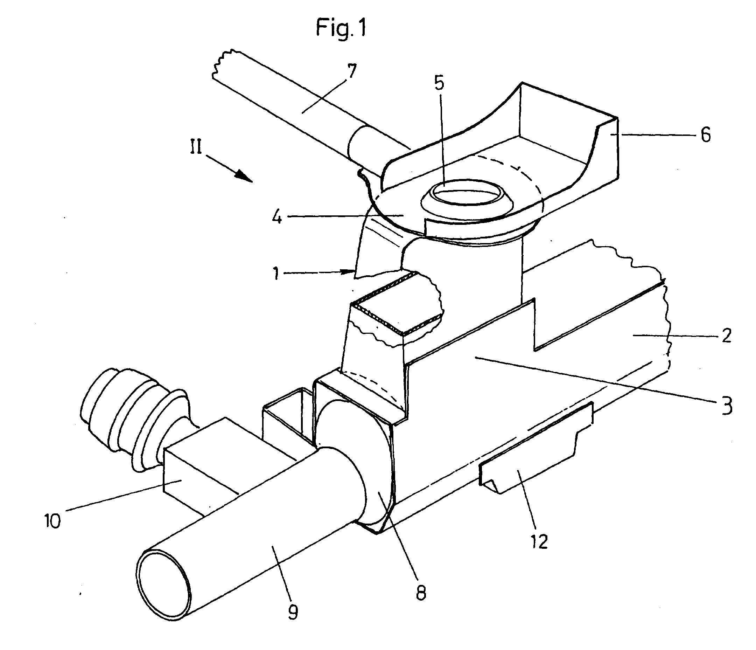

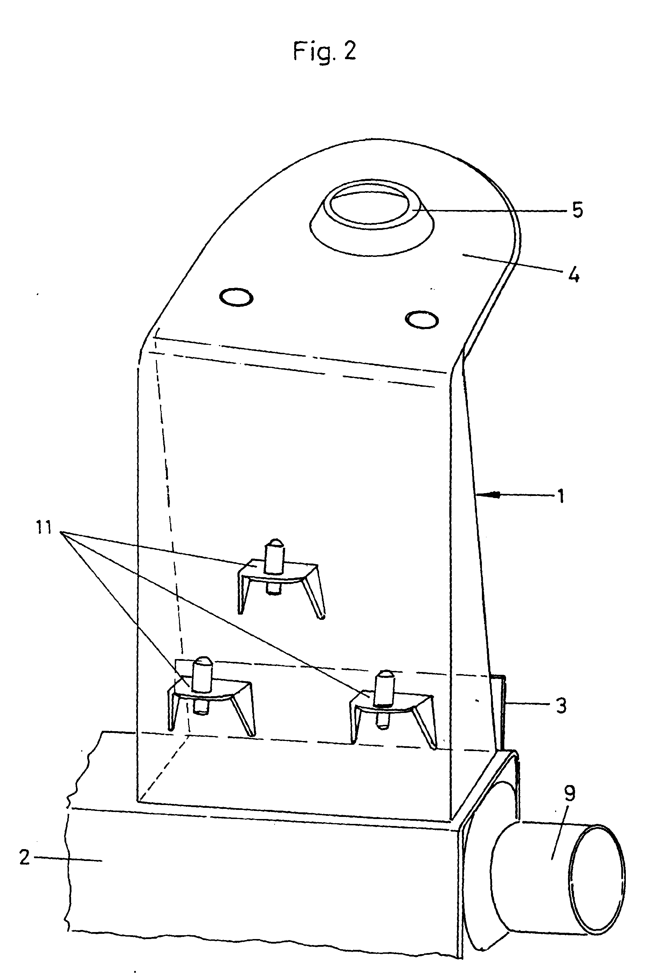

Wie aus Fig. 1 und Fig. 2 ersichtlich ist, weist ein erfindungsgemäßer Federbeinträger 1 im wesentlichen die Gestalt eines flachen Quaders auf, der bezüglich seiner beiden gegenüberliegenden großen Flächen nach oben leicht konisch zuläuft und am oberen Ende in eine sich im wesentlichen senkrecht zur Ausrichtung des flachen Quaders erstreckende obere Plattform 4 hinein fortsetzt. Unterhalb des Federbeinträgers 1 verläuft ein Längsträger 2, der beispielsweise aus einem stranggepreßten Aluminiumprofil besteht. Der Längsträger weist einseitig eine von seiner Oberseite nach oben rangende Anlageplatte 3 auf, an der der im wesentlichen quaderförmige Körper des Federbeinträgers 1 seitlich anliegt. Der Federbeinträger 1 ist mit der Unterseite des flachen quaderförmigen Körpers auf die Oberseite des Längsträgers 2 aufgeklebt und gleichzeitig mit seiner unteren an der Anlageplatte 3 anliegenden Seitenfläche mit dieser verklebt und/oder vernietet.

Auf der Oberseite der oberen Plattform 4 des Federbeinträgers 1 ist ein Federbeinteller 5 ausgebildet. Vorzugsweise kann der gesamte Federbeinträger 1 mit dem flachen quaderförmigen Grundkörper, der oberen Plattform 4 und dem Federbeinteller 5 einstückig als Magnesiumgußteil oder Gußteil aus einer Magnesiumlegierung hergestellt sein. Der Federbeinteller 5 dient zur Aufnahme des entsprechenden Gegenstücks eines Federbeins.

Der Federbeinteller 5 ragt durch eine Öffnung in einer Domstrebenaufnahme 6 nach oben zumindest teilweise aus dieser heraus. Die Domstrebenaufnahme 6 kann beispielsweise aus einem kohlenstoffaserverstärkten Kunststoff bestehen und mit der oberen Plattform 4 des Federbeinträgers 1 verschraubt sein. Die Domstrebenaufnahme 6 haltert, wie dies aus Fig. 1 ersichtlich ist, eine ebenfalls beispielsweise aus kohlenstoffaserverstärktem Kunststoff bestehende Domstrebe 7, die eine Verbindung zur auf der gegenüberliegenden Fahrzeugseite befindlichen Federbeineinheit bzw. zur A-Säule herstellt.

Auf der in Fig. 1 linken Seite, die der Fahrzeugvorderseite entspricht, ist der Längsträger 2 über einen Adapter 8 mit einem als Deformationselement ausgeführten Längsträger 9 verbunden, der beispielsweise aus kohlenstoffaserverstärktem Kunststoff besteht. Der Adapter 8 ist ebenfalls aus Magnesium oder einer Magnesiumlegierung gefertigt. An dem Längsträger 9 ist eine Motorlagerung 10 beispielsweise durch Kleben und Nieten befestigt, die ebenfalls ein Magnesiumgußteil ist. Erfindungsgemäß kann vorgesehen sein, den Federbeinträger 1 zusammen mit der Motorlagerung 10 zu gießen und nachher abzuklappen und getrennt zu montieren.

Auf der Unterseite des Längsträgers 2 ist eine Aufnahme für eine Mutter untergeschweißt, für die Verbindung zu einem Hilfrahmen für beispielsweise die Lenkung.

Aus Fig. 2 ist ersichtlich, daß auf der von der Anlageplatte 3 abgewandten Seite des flachen quaderförmigen Körpers des Federbeinträgers 1 Nebenaggregatlagerungen 11 angebracht sind. Zusätzlich zu diesen Nebenaggregatlagerungen 11 können auch Halterungen für sonstige Anbauteile wie beispielsweise Treibstoffilter oder dergleichen einstückig mit dem Federbeinträger gegossen sein. Es besteht weiterhin die Möglichkeit Schraublöcher und dergleichen sowie Verstärkungsrippen mitzugießen.

### BEZUGSZEICHENLISTE

- 1.: Federbeinträger
- 2.: Längsträger, Strangpreßprofil
- 3.: hochragende Platte von 2
- 4.: obere Plattform von 1
- 5.: Federbeinteller
- 6.: Domstrebenaufnahme
- 7.: Domstrebe
- 8.: Adapter
- 9.: Längsträger aus CFK
- 10.: Motorlagerung
- 11.: Nebenaggregatlagerung
- 12.: Aufnahme für Mutter

## Patentansprüche

1. Tragstruktur einer Karosserie eines Kraftfahrzeugs umfassend mindestens einen Längsträger (2) und einen mit diesem verbindbaren Federbeinträger (1), der eine mit ihm einstückig ausgebildete Federbeinaufnahme (Federbeinteller 5) umfaßt, **dadurch gekennzeichnet,** daß der Federbeinträger (1) als Gußteil ausgeführt ist.

2. Tragstruktur nach Anspruch 1, dadurch gekennzeichnet, daß der Federbeinträger (1) aus Magnesium oder einer Magnesiumlegierung gefertigt ist.

3. Tragstruktur nach einem der Ansprüche 1 oder 2, dadurch gekennzeichnet, daß der Längsträger (2) aus Aluminium oder einer Aluminiumlegierung besteht und vorzugsweise ein Strangpreßprofil ist.

4. Tragstruktur nach einem der Ansprüche 1 bis 3, dadurch gekennzeichnet, daß die einstückig mit dem Federbeinträger (1) ausgeführte Federbeinaufnahme ein Federbeinteller (5) ist.

5. Tragstruktur nach einem der Ansprüche 1 bis 4, dadurch gekennzeichnet, daß der Federbeinträger (1) mit dem Längsträger (2) verklebbar und/oder vernietbar ist.

6. Tragstruktur nach Anspruch 5, dadurch gekennzeichnet, daß die Unterseite des Federbeinträgers (1) mit der Oberseite des Längsträgers (2) verklebbar und/oder vernietbar ist.

7. Tragstruktur nach einem der Ansprüche 5 oder 6, dadurch gekennzeichnet, daß der Längsträger (2) eine sich von seiner Oberseite nach oben erstreckende, vorzugsweise als Platte (3) ausgebildete Anlagefläche umfaßt, an der der Federbeinträger (1) seitlich zumindest teilweise anliegen kann, wobei Anlagefläche und Seitenfläche des Federbeinträgers (1) im Bereich ihrer gegenseitigen Anlage miteinander verklebbar und/oder vernietbar sind.

8. Tragstruktur nach einem der Ansprüche 1 bis 7, dadurch gekennzeichnet, daß der Federbeinträger (1) an seinem oberen Ende in eine sich im wesentlichen horizontal erstreckende Plattform (4) übergeht, auf der eine Domstrebenaufnahme (6) angebracht, insbesondere verschraubt werden kann.

9. Tragstruktur nach Anspruch 8 in seinem Rückbezug auf einen der Ansprüche 4 bis 7, dadurch gekennzeichnet, daß auf der Oberseite der oberen Plattform (4) der Federbeinteller (5) ausgeformt ist.

10. Tragstruktur nach Anspruch 9, dadurch gekennzeichnet, daß in der Domstrebenaufnahme (6) eine Öffnung vorgesehen ist, durch die der Federbeinteller (5) hindurchragen kann.

11. Tragstruktur nach einem der Ansprüche 1 bis 10, dadurch gekennzeichnet, daß der Federbeinträger (1) mindestens eine einstückig mit ihm ausgeführte Nebenaggregatlagerung (11) und/oder mindestens eine einstückig mit ihm ausgeführte Halterung für sonstige Anbauteile wie Treibstoffilter oder dergleichen umfaßt.

12. Tragstruktur nach einem der Ansprüche 1 bis 11, dadurch gekennzeichnet, daß die Tragstruktur einen weiteren, mit dem ersten Längsträger im wesentlichen fluchtenden und mit diesem über einen geeigneten Adapter (8) verbundenen Längsträger (9) umfaßt, der vorzugsweise als Deformationselement aus einem kohlenstoffaserverstärkten Kunststoff hergestellt ist.

13. Tragstruktur nach Anspruch 12, dadurch gekennzeichnet, daß die Tragstruktur weiterhin eine vorzugsweise aus Magnesium oder einer Magnesiumlegierung bestehende Motorlagerung (10) umfaßt, die an einem der Längsträger (1, 9), vorzugsweise durch Kleben und/oder Vernieten befestigt ist.

14. Verfahren zur Herstellung einer Tragstruktur nach Anspruch 13, gekennzeichnet durch die folgenden Verfahrensschritte:
― die Motorlagerung (10) wird zusammen mit dem Federbeinträger (1) gegossen;
― die Motorlagerung (10) wird von dem Federbeinträger (1) abgeklappt oder getrennt;
― die Motorlagerung (10) wird an einen der Längsträger (1, 9) angeklebt und/oder angenietet.
